# FASCICULE DE BREVET EUROPEEN

(11) **EP 3 549 255 B1**
(45) Date de publication et mention de la délivrance du brevet: **07.10.2020**
(21) Numéro de dépôt: 17804240.4
(22) Date de dépôt: 07.11.2017
(51) Int. Cl.: H02S 20/23

(54) **PIECE D'OUTILLAGE POUR PANNEAUX SOLAIRES FIXES SUR RAILS PROFILES**
WERKZEUGTEIL FÜR AN PROFILSCHIENEN BEFESTIGTE SOLARPANEELE
TOOLING PIECE FOR SOLAR PANELS FASTENED ON PROFILE RAILS

(30) Priorité: 02.12.2016 FR 1661885
(43) Date de publication de la demande: 09.10.2019
(73) Titulaire: IRFTS, 38240 Meylan (FR)
(72) Inventeur: REUZEAU, Franck, 38230 Chavanoz (FR)
(74) Mandataire: Prugneau, Philippe
(86) Numéro de dépôt international: PCT/FR2017/053031
(87) Numéro de publication internationale: WO 2018/100261

(56) Documents cités:
- US-A1- 2011 214 365
- US-A1- 2014 000 085

## Description

### Domaine technique

Le domaine de l'invention est celui des panneaux fixés sur rails profilés, par exemple des panneaux solaires ou photovoltaïques fixés sur les toitures de bâtiments industriels.

L'invention concerne plus particulièrement une pièce d'outillage dite « perdue » qui sert à extraire du rail profilé un module de fixation servant à fixer le panneau au rail.

### Technique antérieure

Il existe aujourd'hui des modules de fixation conçus pour fixer des panneaux photovoltaïques sur des rails profilés.

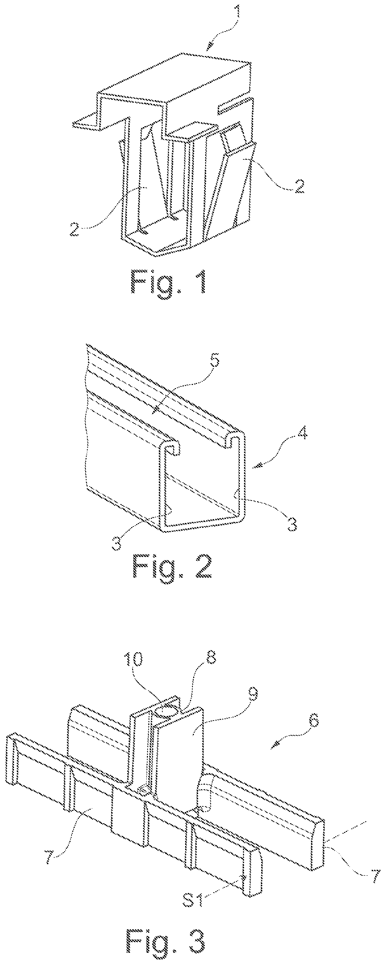

Un module de fixation 1 de ce type est représenté sur la figure 1.

Il est en tôle pliée en forme générale de rectangle et comprend des ailettes flexibles 2 disposées sur deux côtés latéraux opposés du module.

Ces ailettes flexibles sont orientées de façon oblique par rapport à ces deux cotés opposés pour venir se clipser aux extrémités repliées des parois latérales intérieures 3 d'un rail 4 profilé comme représenté sur la figure 2 quand le module est enfoncé à l'intérieur du rail.

D'autres modules de fixations sur rails profilés pour panneaux sont encore connus des demandes de brevet US2013/0048056, US2013/0102165 et US2014/0000085.

Le clipsage sur rail profilé du module de fixation permet d'effectuer un montage rapide, simple et robuste des panneaux photovoltaïques.

De par son système d'accroché spécifique, de type griffe par exemple, le module de fixation 1 ne peut pas être ôté du panneau solaire. La seule voie de démontage possible est alors le déclipsage du module de fixation 1 du rail profilé 4.

Ce type de module de fixation 1 est également conçu pour être relativement invisible de l'extérieur de la toiture une fois les panneaux photovoltaïques montés.

L'inconvénient est alors que, une fois monté dans le rail profilé pour fixer les panneaux, le module de fixation n'est plus accessible et donc il n'est plus démontable.

Il faut alors déplacer les panneaux, ce qui est fastidieux du fait qu'il n'y a pas d'espace réservé à cet effet, les capteurs photovoltaïques étant accolés tant que possible pour optimiser le ratio puissance/surface, et que le module de fixation assure une fixation fiable et robuste, puis utiliser un outil d'extraction spécifique difficile de manipulation pour manœuvrer et rétracter les ailettes du module de fixation.

On comprendra également que le temps gagné au montage grâce au clipsage sera perdu au démontage du fait de la pénibilité du déclipsage du module de fixation 1 du rail 4. Ces manipulations augmentent aussi le risque de casser les panneaux lors du démontage.

### Exposé de l'invention

Il existe aujourd'hui le besoin d'avoir un module de fixation amovible, c'est à dire démontable rapidement et facilement, afin de garantir un accès de maintenance en tout lieu du champ de capteurs photovoltaïques.

Le but de l'invention est de proposer une pièce d'outillage qui permet de démonter facilement et rapidement de tels modules de fixation.

A cet effet, l'invention a pour objet une pièce d'outillage selon la revendication 1 conçue pour démonter un module de fixation de panneau clipsé à un rail, la pièce d'outillage comprenant deux lames sur chant parallèles entre elles et conçues pour compresser des ailettes flexibles du module de fixation clipsées à des parois latérales intérieures dudit rail lorsque ledit module de fixation est monté dans le rail, caractérisée en ce qu'elle comprend un corps central interposé entre lesdites lames de sorte que lors de l'insertion de ladite pièce dans le rail avec le module de fixation, les lames s'étendent sur chant chacune entre une paroi d'un côté du rail et une ailette flexible du module de fixation, en ce que ledit corps central intègre un moyen de levage agencé pour être actionné depuis l'extérieur dudit corps central pour soulever la pièce d'outillage dans le rail, et en ce que les lames sont conçues de telle manière que lors du soulèvement de la pièce d'outillage par les moyens de levage les lames remontent les parois du rail pour compresser les ailettes flexibles vers l'intérieur du rail ce qui permet à la fin du déplacement des lames un déclipsage dudit module de fixation du rail.

L'idée à la base de l'invention est donc ici de proposer une pièce d'outillage capable de rétracter les ailettes flexibles d'un module de fixation dans un rail profilé en étant actionnée depuis l'extérieur du rail profilé, par exemple par un technicien opérant sur un toit recouvert par des panneaux photovoltaïques.

On comprendra ici que la pièce d'outillage selon l'invention est destinée à être placée dans le rail profilé avant la pose du module de fixation.

La pièce d'outillage selon l'invention est dite « perdue » car elle ne peut pas être retirée du rail une fois posée.

Pour le démontage d'un module de fixation à ailettes comme indiqué plus haut, on comprendra que l'actionnement de la pièce d'outillage se fait essentiellement à l'aide d'un outil rapporté mais il est possible d'envisager un levage de la pièce d'outillage par un effet de levier monté rotatif dans le corps de cette pièce d'outillage.

On comprendra en outre que l'application de la pièce d'outillage selon l'invention peut s'étendre à toutes sortes de fixation de panneaux sur rails profilés.

La pièce d'outillage selon l'invention peut présenter les particularités suivantes :
- le moyen de levage comprend une vis insérée dans un trou traversant dudit corps central, la vis étant apte à déboucher sous le corps central quand elle est actionnée pour appuyer contre le rail, la vis ayant une tête présentant une empreinte pour un outil de vissage ;
- la vis a une extrémité munie d'une plaque d'appui avec des doigts de guidage qui coulissent librement dans le corps central, la plaque d'appui venant en appui contre le rail sous le corps central ;
- le chant supérieur des lames destiné à être en contact avec les ailettes du module de fixation est biseauté ;
- le corps central saille au-dessus des lames et est disposé au milieu des lames pour former en section transversale une pièce monobloc sensiblement en forme de H ;
- le corps central présente une section transversale sensiblement en forme de H.

### Description sommaire des dessins

La présente invention sera mieux comprise et d'autres avantages apparaîtront à la lecture de la description qui suit et des dessins annexés dans lesquels :
- les figures 1 et 2 illustrent en perspective respectivement un module de fixation et un rail profilé connus de l'art antérieur pour fixer un panneau solaire ;
- la figure 3 représente en perspective une pièce d'outillage selon l'invention qui est adaptée pour un module de fixation montré sur la figure 1 qui est monté dans un rail profilé montré sur la figure 2 ;
- les figures 4 et 5 illustrent en perspective une pièce d'outillage selon l'invention dans un rail profilé avec coupe locale respectivement dans une position de repos et dans une position de travail;
- les figures 6 à 8 illustrent en coupe transversale une pièce d'outillage selon l'invention montée dans un rail profilé dans différentes positions de repos et de travail;
- la figure 9 représente en perspective une vue de dessus une pièce d'outillage selon l'invention en situation avec des panneaux solaires, avec coupe locale sur les faces avant des panneaux solaires;
- la figure 10 représente en perspective éclatée la pièce d'outillage selon un mode de réalisation particulier de l'invention.

### Description des modes de réalisation

L'invention se rapporte ici à une pièce d'outillage 6, visible sur la figure 3, qui sert à démonter un module de fixation 1 clipsé dans un rail 4 comme illustrés sur les figures 1 et 2 pour maintenir un panneau. La pièce d'outillage 6 est une pièce dite "perdue", en ce qu'une fois insérée dans le rail 4, elle ne peut normalement plus être récupérée.

La pièce d'outillage 6 comprend deux lames 7 disposées sur chant et qui sont parallèles l'une par rapport à l'autre.

La distance entre les deux lames est légèrement inférieure à la largeur du rail 4.

La pièce d'outillage 6 comprend encore un corps central 8 interposé entre les lames 7 pour former une pièce à section transversale suivant SI sensiblement en forme de H comme visible sur la figure 3.

Sur cette figure on voit que le bas du corps central est surélevé par rapport au socle des lames 7.

Lorsque la pièce d'outillage 6 est insérée dans le rail 4, les lames 7 sur chant reposent dans le fond du rail 4 à fleur des parois latérales intérieures 3.

Comme visible sur la figure 3, le corps central 8 a en section transversale une forme en H et saille au-dessus des lames 7.

Ainsi, une fois la pièce d'outillage 6 insérée dans le rail 4, le corps central 8 s'étend entre les bords supérieurs des parois latérales 3 à travers l'ouverture 5 du rail.

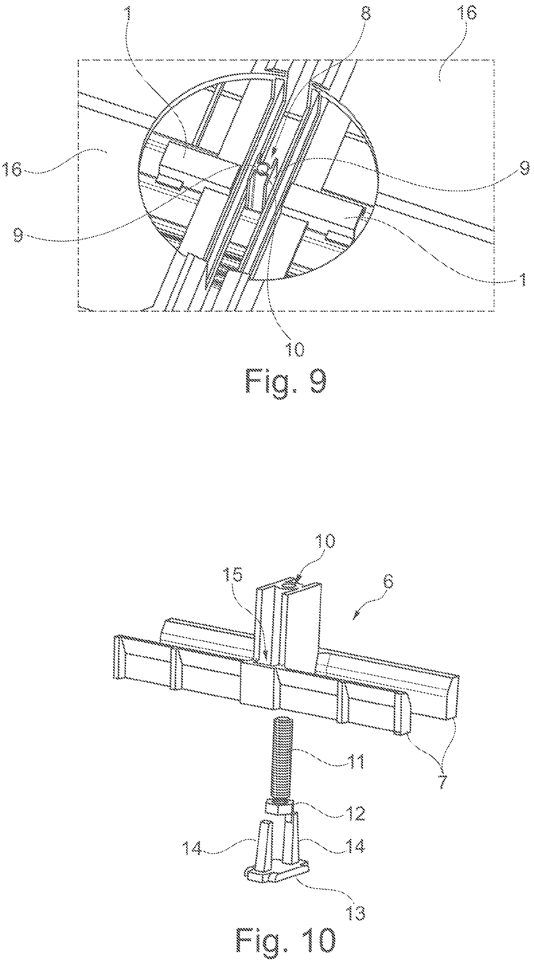

Ici, le corps central 8 à section en forme de H comporte deux flancs latéraux 9 parallèles destinées à caler les panneaux adjacents 16 montés sur le rail 4 comme visible sur la figure 9.

La surface des flancs est de préférence lisse pour faciliter le glissement du corps central 8 entre les deux panneaux photovoltaïques adjacents tout en garantissant un bon parallélisme entre eux.

Sans restreindre la portée de l'invention, les lames 7 peuvent être du type à être assemblé sur le corps central 8 de sorte que la pièce d'outillage 6 peut se présenter en kit.

La pièce d'outillage 6 peut aussi être une pièce monobloc en matière plastique venue de moulage.

Les lames 7 et le corps central 8 sont de préférence en matière plastique dur ou en métal.

Selon l'invention, le corps central 8 comprend un moyen de levage actionnable de l'extérieur du corps central et qui permet de soulever les lames 7 (avec le corps central 8) à l'intérieur du rail 4 en direction de l'ouverture 5.

Le moyen de levage, visible sur la figure 10, présente ici un trou traversant 10 dans le corps central 8 adapté pour recevoir une vis 11 apte à déboucher sous le corps central 8 entre les lames 7 quand elle est actionnée pour appuyer contre le fond du rail 4 de façon à soulever les lames 7 contre les parois 3 en direction de l'ouverture 5 du rail.

La vis 11 peut présenter avantageusement une tête avec une empreinte pour un outil de vissage, l'empreinte étant accessible depuis l'ouverture supérieure du trou 10 sur le dessus du corps central 8.

La vis peut être engagée dans un filetage qui peut être formé sur la surface intérieure du trou 10 ou encore qui peut être formé dans un écrou 12 rapporté dans un lamage à l'extrémité du trou 10 comme illustré sur la figure 10.

L'extrémité de la vis qui débouche sous le corps central peut être avantageusement munie d'une plaque d'appui 13 montrée sur la figure 10 munie de doigts de guidage, ici deux doigts de guidage qui s'étendent sensiblement perpendiculairement de la plaque d'appui 13, qui coulissent librement dans des alésages 15 prévus dans le corps central.

L'actionnement en rotation de la vis 11 à l'aide d'un outil de vissage provoque une translation de la vis dans le corps central 8, l'extrémité de la vis débouchant sous le corps central.

Quand l'extrémité de la vis 11 vient en contact sur le fond du rail et que l'actionnement en rotation continue, cela provoque par réaction mécanique, le soulèvement des lames vers le haut du côté de l'ouverture 5 du rail 4.

La plaque d'appui 13 permet l'appui de la vis 11 sur le fond du rail 4 dans le cas par exemple où le fond de ce rail serait percé.

Cette plaque d'appui 13 est de préférence en matière résistante, par exemple en métal ou en plastique dur.

L'utilisation d'une pièce d'outillage selon l'invention est maintenant décrite.

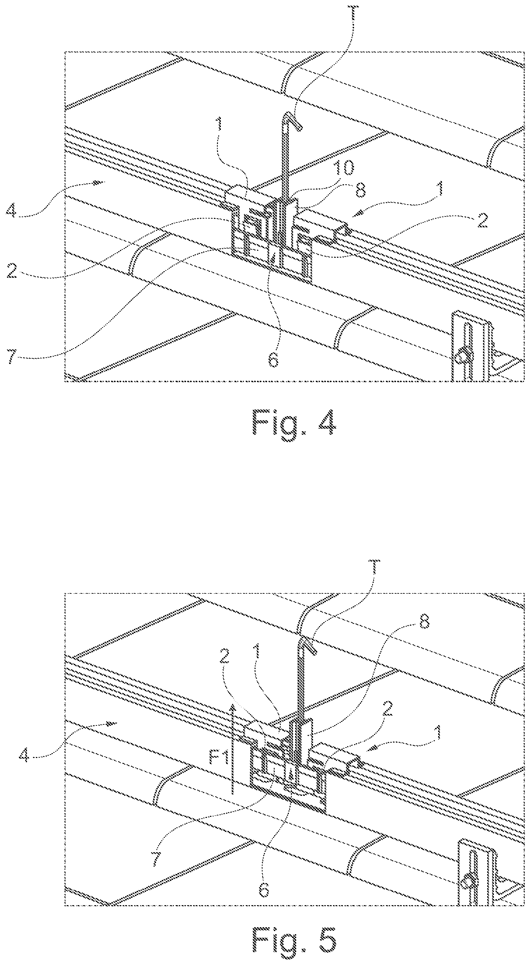

En référence aux figures 4 à 5 où est représenté un rail 4 partiellement ouvert, on a illustré une pièce d'outillage 6 interposée entre deux modules de fixation 1 disposés dans le rail 4.

La référence T désigne un outil de vissage qui est inséré dans le trou 10 de la pièce de fixation 6 pour s'engager par exemple dans l'empreinte prévue dans la tête de la vis 11 afin de l'actionner en rotation.

Sur la figure 4, la pièce d'outillage 6 est dans une position de repos avec les lames 7 reposant dans le fond du rail 4.

Sur la figure 5, avec l'outil T, on a vissé la vis 11 dans le trou 10 ce qui a eu pour effet de soulever les lames 7 de la pièce d'outillage 6 suivant la flèche F1.

Comme visible sur la figure 5, les ailettes 2 des modules de fixation 1 ont été rétractées vers l'intérieur du rail 4 sous l'effet du déplacement de la pièce d'outillage suivant la flèche F1.

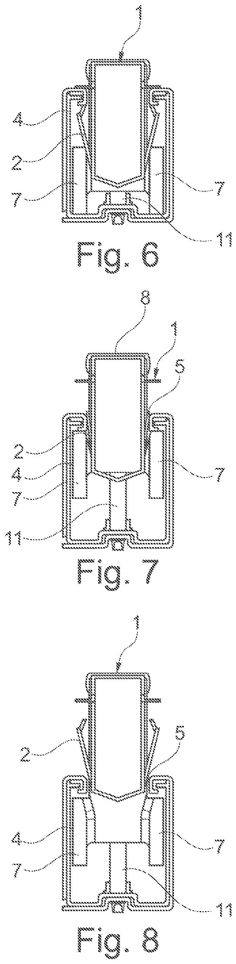

Sur les figures 6 à 8, on a décomposé le processus de compression des ailettes flexibles 2 par les lames 7 de la pièce d'outillage.

Le déplacement des lames 7 vers le haut suivant la flèche F1 permet la sortie du module de fixation par la rétractation des ailettes 2 leur autorisant la traversée de l'ouverture 5 du rail.

Par conséquent, la pièce d'outillage selon l'invention contribue à permettre le retrait des deux modules de fixation 1 hors du rail profilé sans manipulation fastidieuse et rédhibitoire. Comme indiqué plus haut, la pièce d'outillage 6 est destinée à être perdue dans le rail 4.

Sur la figure 9, on a illustré plus en détail le dessus du corps 8 de la pièce d'outillage 6 qui en section transversale a la forme d'un H.

Les flancs latéraux 9 du corps 8 de la pièce d'outillage sont ici parallèles entre eux ce qui facilite le coulissement du corps 8 entre les deux panneaux photovoltaïques 16 adjacents.

Afin de faciliter le glissement des lames 7 sur les ailettes flexibles 2 de chaque module de fixation 1, le chant supérieur des lames 7 peut être biseauté comme illustré sur la figure 3.

## Revendications

1. Pièce d'outillage (6) conçue pour démonter un module de fixation de panneau clipsé à un rail, la pièce d'outillage comprenant deux lames (7) sur chant parallèles entre elles et conçues pour compresser des ailettes flexibles (2) du module de fixation clipsées à des parois latérales intérieures (3) dudit rail lorsque ledit module de fixation est monté dans le rail, **caractérisée en ce qu'**elle comprend un corps central (8) interposé entre lesdites lames de sorte que lors de l'insertion de ladite pièce dans le rail avec le module de fixation, les lames s'étendent sur chant chacune entre une paroi d'un côté du rail et une ailette flexible du module de fixation, **en ce que** ledit corps central intègre un moyen de levage agencé pour être actionné depuis l'extérieur dudit corps central pour soulever la pièce d'outillage dans le rail, et **en ce que** les lames sont conçues de telle manière que lors du soulèvement de la pièce d'outillage par les moyens de levage les lames remontent les parois du rail pour compresser les ailettes flexibles vers l'intérieur du rail ce qui permet à la fin du déplacement des lames un déclipsage dudit module de fixation du rail.

2. Pièce d'outillage selon la revendication 1, **caractérisée en ce que** le moyen de levage comprend une vis insérée dans un trou traversant (10) dudit corps central (8), la vis étant apte à déboucher sous le corps central quand elle est actionnée pour appuyer contre le rail, la vis ayant une tête présentant une empreinte pour un outil de vissage.

3. Pièce d'outillage selon la revendication 2, **caractérisée en ce que** la vis a une extrémité munie d'une plaque d'appui (13) avec des doigts de guidage qui coulissent librement dans le corps central, la plaque d'appui venant en appui contre le rail sous le corps central.

4. Pièce d'outillage selon l'une quelconque des revendications précédentes, **caractérisée en ce que** le chant supérieur des lames (7) destiné à être en contact avec les ailettes du module de fixation est biseauté.

5. Pièce d'outillage selon l'une quelconque des revendications précédentes, **caractérisée en ce que** le corps central saille au-dessus des lames (7) et est disposé au milieu des lames pour former en section transversale une pièce monobloc sensiblement en forme de H.

6. Pièce d'outillage selon l'une quelconque des revendications précédentes, **caractérisé** en ce le corps central (8) présente une section transversale sensiblement en forme de H.

## Patentansprüche

1. Werkzeugteil (6), geschaffen zum Demontieren eines Befestigungsmoduls einer an eine Schiene geklippsten Leiste, wobei das Werkzeugteil zwei zueinander auf Kante parallele Lamellen (7) umfasst, die dazu geschaffen sind, um an innere Seitenwandungen (3) der Schiene geklippste flexible Flügel (2) des Befestigungsmoduls zu spannen, wenn das Befestigungsmodul auf der Schiene montiert ist, **dadurch gekennzeichnet, dass** es einen zentralen Korpus (8) umfasst, der zwischen den Lamellen derart zwischengeordnet ist, dass bei dem Einsetzen des Teils in die Schiene mit dem Befestigungsmodul die Lamellen sich auf Kante jeweils zwischen einer Wandung einerseits der Schiene und einem flexiblen Flügel des Befestigungsmoduls erstrecken, dass der zentrale Korpus ein Hebemittel integriert, das ausgebildet ist, um von außerhalb des zentralen Korpus zum Anheben des Werkzeugteils in die Schiene betätigt zu werden, und dass die Lamellen derart beschaffen sind, dass beim Anheben des Werkzeugteils durch die Hebemittel die Lamellen die Wandungen der Schiene herauffahren, um die flexiblen Flügel auf der Innenseite der Schiene zu spannen, wodurch am Ende der Verlagerung der Lamellen ein Entklippsen des Befestigungsmoduls vonder Schiene ermöglicht ist.

2. Werkzeugteil nach Anspruch 1, **dadurch gekennzeichnet, dass** das Hebemittel eine in einem durchgehendes Loch (10) des zentralen Korpus (8) eingesetzte Schraube umfasst, wobei die Schraube in der Lage ist, unter dem zentralen Korpus zu münden, wenn sie betätigt wird, um gegen die Schiene zu drücken, wobei die Schraube einen Kopf mit einer Ausprägung für ein Schraubwerkzeug aufweist.

3. Werkzeugteil nach Anspruch 2, **dadurch gekennzeichnet, dass** die Schraube ein mit einer Stützplatte (13) ausgestattetes Ende aufweist mit Führungsfingern, die frei in dem zentralen Korpus gleiten, wobei die Stützplatte gegen die Schiene unter dem zentralen Korpus in Abstützung gelangt.

4. Werkzeugteil nach einem der vorhergehenden Ansprüche, **dadurch gekennzeichnet, dass** die obere Kante der Lamellen (7), die dazu bestimmt ist, mit den Flügeln des Befestigungsmoduls in Kontakt zu gelangen, angeschrägt ist.

5. Werkzeugteil nach einem der vorhergehenden Ansprüche, **dadurch gekennzeichnet, dass** der zentrale Korpus oberhalb der Lamellen (7) vorsteht und in der Mitte der Lamellen angeordnet ist, um im Querschnitt ein im Wesentlichen H-förmiges einteiliges Teil zu bilden.

6. Werkzeugteil nach einem der vorhergehenden Ansprüche, **dadurch gekennzeichnet, dass** der zentrale Korpus (8) einen im Wesentlichen H-förmigen Querschnitt aufweist.

## Claims

1. A piece of tooling (6) designed for disassembling a panel fastener module clipped to a rail, the piece of tooling comprising two blades (7) on edge that are mutually parallel and designed to compress the flexible tabs (2) of the fastener module clipped to the inner side walls (3) of said rail when said fastener module is mounted in the rail, the piece of tooling being **characterized in that** it comprises a central body (8) interposed between said blades so that on insertion of said piece into the rail with the fastener module, the blades extend on edge, each between a wall of one side of the rail and a flexible tab of the fastener module, **in that** said central body incorporates lift means arranged to be actuated from outside said central body in order to raise the piece of tooling inside the rail, and **in that** the blades are designed in such a manner that while the piece of tooling is being raised by the lift means the blades move up the walls of the rail to press the flexible tabs towards the inside of the rail, thereby making it possible, once the blades have finished moving, to unclip said fastener module from the rail.

2. A piece of tooling according to claim 1, **characterized in that** the lift means comprise a screw inserted in a through hole (10) in said central body (8), the screw being suitable, when actuated, for penetrating under the central body in order to press against the rail, the screw having a head presenting a socket for a driver tool.

3. A piece of tooling according to claim 2, **characterized in that** the screw has an end provided with a bearing plate (13) having guide fingers that slide freely in the central body, the bearing plate coming to bear against the rail under the central body.

4. A piece of tooling according to any preceding claim, **characterized in that** the top edges of the blades (7) for coming into contact with the tabs of the fastener module are chamfered.

5. A piece of tooling according to any preceding claim, **characterized in that** the central body projects above the blades (7) and is arranged in the middle of the blades so as to form, in cross-section, a substantially H-shaped single piece.

6. A piece of tooling according to any preceding claim, **characterized in that** the central body (8) itself presents a cross-section that is substantially H-shaped.
